# EUROPÄISCHE PATENTSCHRIFT

(11) **EP 1 415 523 B1**
(45) Veröffentlichungstag und Bekanntmachung des Hinweises auf die Patenterteilung: **18.10.2006**
(21) Anmeldenummer: 03017336.3
(22) Anmeldetag: 31.07.2003
(51) Int. Cl.: A01C 7/10, A01B 79/00

(54) **Sämaschine**
Sowing machine
Semoir

(30) Priorität: 02.11.2002 DE 10251114
(43) Veröffentlichungstag der Anmeldung: 06.05.2004
(73) Patentinhaber: Kverneland ASA, 4355 Kvernaland (NO)
(72) Erfinder: Plet, Oleg, 33104 Paderborn (DE); Meinel, Till, 59494 Soest (DE)
(74) Vertreter: Becker, Thomas

(56) Entgegenhaltungen:
- DE-A- 10 130 182
- US-A- 5 956 255
- US-A- 6 070 539
- US-A1- 2001 000 806

## Beschreibung

Die Erfindung betrifft eine Sämaschine, insbesondere für eine Einzelkornsaat, wie sie beispielsweise zur Aussaat von Mais, Zuckerrüben und anderen Feinsamen verwendet wird.

Der grundsätzliche Aufbau einer solchen Sämaschine wird in der EP 0 592 995 B1 beschrieben. Diese Veröffentlichung bildet nicht nur selber einen Stand der Technik, sondern gibt auch einen Überblick über den bis zum Prioritätstag dieser Veröffentlichung bekannt gewordenen Stand der Technik.

Die in der EP 0 592 995 B1 beanspruchte Sämaschine zeichnet sich durch einen Wegsensor aus, der den Fahrweg der Sämaschine (beziehungsweise einer zugehörigen Zugmaschine) erfaßt. Eine zentrale Steuereinrichtung weist einen oder mehrere, stufenlos verstellbare Proportionalregler auf. Diese Regler dienen der Verarbeitung von Wegimpulsen, die der Wegsensor abgibt. Diese Wegimpulse werden in Impulse zur Ansteuerung von Gleichstrommotoren verwendet, die jedem Einzelkornsägerät zugeordnet sind. Dabei weist jedes Einzelkornsägerät einen Drehimpulsgeber und einen eigenen Regelkreis auf, um einen vorgegebenen Säabstand (Abstand der einzelnen Saatgutkörner) reproduzierbar sicherzustellen.

Das bekannte Lösungsprinzip besteht zusammengefaßt darin, den Fahrweg als Führungsgröße zu benutzen. In Abhängigkeit von einer bestimmten Weglänge, die zurückgelegt wurde, wird ein Säkorn von dem Sägerät abgelegt.

Die US-A-6070539 betrifft ein Gerät zur Ausbringung landwirtschaftlicher Produkte. Die US 2001/000806 A1 beschreibt ein GPS-System für Sämaschinen.

Mit dieser Maschine lassen sich auch unterschiedliche Säabstände von Reihe zu Reihe (also von Sägerät zu Sägerät) einstellen.

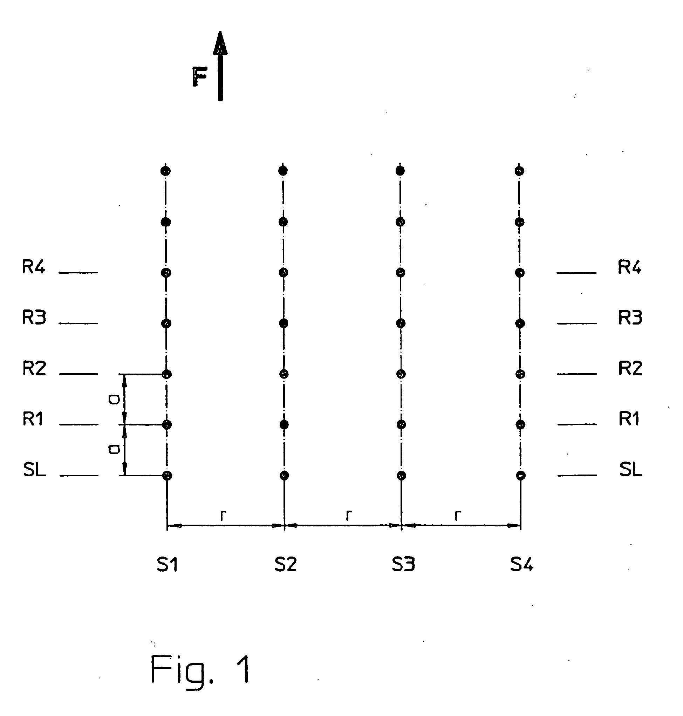

In Figur 1 ist schematisch ein vorgegebenes "Säbild" dargestellt. F bezeichnet die Transportrichtung der Maschine. Das Bild geht von vier Sägeräten S1, S2, S3 und S4 aus, die nebeneinander an einem gemeinsamen Rahmen befestigt sind, wie der zitierte Stand der Technik im einzelnen beschreibt. Es wird weiter davon ausgegangen, daß jedes Sägerät, ausgehend von einer mit SL bezeichneten "Startlinie", Saatkörner mit einem Abstand "a" ablegt. Bei ordnungsgemäßer Funktionsweise der Sämaschine ergibt sich das in Figur 1 dargestellte Säbild. Die einzelnen Saatkörner der Säaggregate S1, S2, S3 und S4 liegen jeweils auf einer gedachten Linie/entlang einer Reihe (R1, R2, R3, R4), wobei der Abstand von Reihe zu Reihe konstant a beträgt (entsprechend dem Kornabstand, auf den die Säaggregate S1, S2, S3, S4 eingestellt sind).

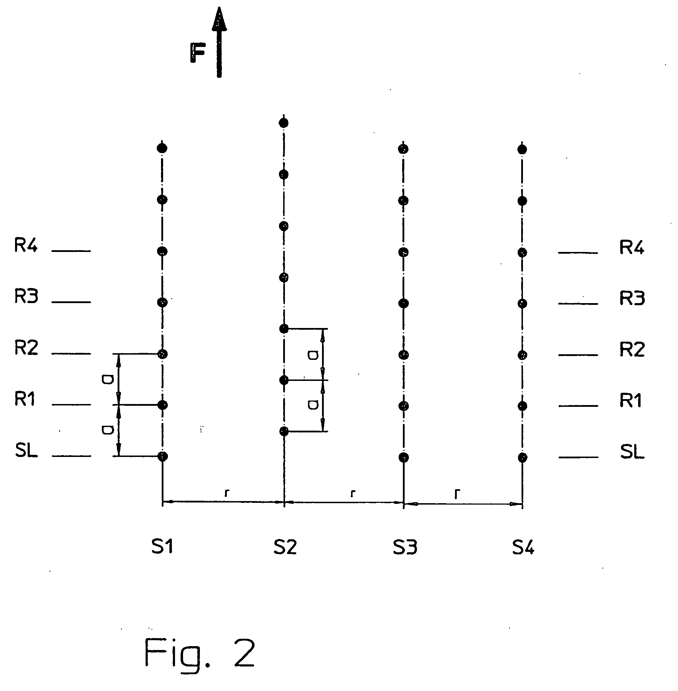

Kommt es nun - aus welchen Gründen auch immer - im Bereich des Einzelkornsäaggregates S2 zu einer Verzögerung an der Startlinie SL, so entsteht das in Figur 2 dargestellte "unsymmetrische" Säbild. Unter der Voraussetzung, daß alle Säaggregate anschließend "normal" weiter arbeiten, also nach einer Wegstrecke a jeweils präzise ein weiteres Saatkorn ablegen bleibt die unkontrollierte (willkürliche) Ablage der Saatgutkörner zwischen den einzelnen Säaggregaten erhalten. Das vorgegebene Säbild ist nicht mehr realisierbar.

Der Erfindung liegt die Aufgabe zugrunde, eine Sämaschine der gattungsgemäßen Art anzubieten, bei der diese Nachteile vermieden werden. Mit der Sämaschine soll ein vorgegebenes Säbild so präzise wie möglich eingehalten werden. Vorzugsweise soll die Sämaschine so arbeiten, daß auch unregelmäßige Säbilder präzise erstellt werden können. Dies gilt beispielsweise für Anwendungen, bei denen mit dem aus dem Saatgut erwachsenden Pflanzen anschließend "Bilder" dargestellt werden, die zum Beispiel aus der Luft (aus einem Flugzeug) erkannt und als Werbeträger genutzt werden können.

Der Erfindung liegt folgende Überlegung zugrunde: Der Stand der Technik betrifft Sämaschinen, bei denen der Fahrweg als Führungsgröße benutzt wird. Diese Führungsgröße ist "1-dimensional". Die skizzierten Nachteile des Standes der Technik können vermieden werden, sofern eine "2-dimensionale Regelung" erfolgt, und zwar nicht nur in Richtung des Fahrweges, sondern auch "senkrecht dazu", das heißt konkret: zwischen benachbarten Säaggregaten.

Geht man von dem eingangs skizzierten Beispiel (Figuren 1, 2) aus, so wird der grundsätzliche Unterschied zwischen dem erfindungsgemäßen Konzept und der bekannten Lösung deutlich:

Kommt es im Bereich des Säaggregates S2 zu der skizzierten Verzögerung so setzt sich dieser "Säfehler" nicht in Fahrrichtung der Sämaschine kontinuierlich fort, sondern er wird umgehend von dem benachbarten Säaggregat (beispielsweise S1) erkannt und es erfolgt eine Nachsteuerung des betroffenen Säaggregates S2. Im Ergebnis führt dies dazu (je nach Regelung), daß entweder das nächste Saatkorn des Säaggregates S2 vorzeitig, nämlich parallel zum entsprechenden Saatkorn des Säaggregates S1 abgelegt wird oder das nächste Saatkorn vom Säaggregat S2 verzögert, nämlich mit dem übernächsten regulären Saatkorn des Säaggregates S1 abgegeben wird.

Dies ist aber nur eine Möglichkeit der 2-dirhensionalen Steuerung/Regelung der Sämaschine. So kann zum Beispiel bei einer Führung der Sämaschine entlang einer Kurve mit Hilfe eines Winkelsensors der "weitere Weg" außenliegender Säaggregate bei der Kurvenbewegung mathematisch berechnet und entsprechend ausgeglichen werden, so daß auch innerhalb einer Kurvenführung Saatkörner benachbarter Säaggregate "entlang einer Linie" abgelegt werden, wie nachstehend noch beschrieben wird.

Schließlich ermöglicht es diese grundsätzliche Regelungs- und Steuerungstechnik auch, völlig beliebige, auch unsymmetrische Säbilder abzubilden, indem beispielsweise jedes einzelne Säaggregat individuell über seine Position angesteuert und geregelt (gesteuert) wird.

Danach betrifft die Erfindung in ihrer allgemeinsten Ausführungsform eine Sämaschine mit folgenden Merkmalen:
- mehrere Säaggregate sind im Abstand nebeneinander an einem Rahmen befestigt,
- jedes Säaggregat weist einen eigenen Antrieb zur Ablage von Saatgut auf,
- die Sämaschine umfaßt eine Regelung, die so ausgelegt ist, daß sie bei einem vorgegebenen Säbild entweder
- mindestens ein Säaggregat so regelt, daß dieses Säaggregat unter Berücksichtigung der Position der Saatgutablage mindestens eines benachbarten Säaggregats das Saatgut ablegt, wobei die Position jedes einzelnen Saatgutes und damit die Position des nächsten abzulegenden Saatguts genau bestimmbar ist, oder
- alle Säaggregate zentral unter Verwendung eines externen Systems zur Positionsbestimmung der Saatgutablage jedes einzelnen Säaggregats, unter Berücksichtigung der Position der Saatgutablage jeweils mindestens eines benachbarten Säaggregates geregelt werden, wobei die Position jedes abgelegten Saatguts und damit die Position des nächsten abzulegenden Saatguts genau bestimmbar ist.

Der Begriff "Regelung" umfaßt erfindungsgemäß auch eine entsprechende "Steuerung".

Der Begriff "Säaggregat" umfaßt jede technische Ausführungsform eines Mittels, mit dem Saatgut ausgebracht wird, insbesondere Einzelkornsäeinrichtungen.

Entscheidend ist, daß die einzelnen Säaggregate, die nebeneinander entlang eines entsprechenden Rahmens angeordnet (befestigt) sind, untereinander steuerungstechnisch "verlinkt" sind. Im einfachsten Fall ist die Steuerung eines Säaggregates von der Steuerung (Position) des benachbarten Säaggregates abhängig. Die Vorteile der Erfindung können in besonderer Weise ausgenutzt werden, wenn die Steuerungen (Positionen) mehrerer Säaggregate untereinander oder in Bezug auf ein "Haupt-Säaggregat" (Master-Säaggregat) gesteuert werden. Die Vorteile lassen sich optimal ausnutzen, wenn alle Säaggregate untereinander regelungstechnisch vernetzt sind.

Gemäß einer Ausführungsform kann die Regelung deshalb so ausgelegt werden, daß sie mindestens ein Säaggregat so regelt, daß dieses Säaggregat unter Berücksichtigung der Position der Saatgutablage mehrerer benachbarter Säaggregate das nächste Saatgut ablegt.

Eine andere Möglichkeit sieht vor, die Regelung/Steuerung so auszulegen, daß sie mehrere Säaggregate so einstellt, daß jedes dieser Säaggregate unter Berücksichtigung der Position der Saatgutablage jeweils mindestens eines benachbarten Säaggregates das jeweils nächste Saatgut ablegt.

Die Position der Saatgutablage mindestens eines Säaggregates kann durch ein externes System zur Positionsbestimmung des zuletzt abgelegten Saatgutes erfolgen.

Hierzu können beispielsweise Festzuordnungssysteme wie GPS global positioning system), DGPS (Differential global positioning system) oder ein Laserpositioniersystem dienen. Einzelheiten ergeben sich aus www.starlinkdgps.com mit der Maßgabe, dass die Bestimmungsgenauigkeit heute im cm- bis mm-Bereich liegt.

Mit diesen Systemen, die als solche Stand der Technik sind, ist es möglich, die Position eines abgelegten Saatkorns genau zu bestimmen und damit auch die Position des nächsten abzulegenden Saatkorns.

Ein entsprechendes System kann sowohl an der Sämaschine selbst, als auch an einer zugehörigen Zugmaschine eingerichtet werden.

Die Regelung des Säaggregates kann in Abhängigkeit von der Position der Saatgutablage eines benachbarten Säaggregates unter Verwendung eines Winkelsensors erfolgen. Mit diesem Sensor lässt sich ein Winkel erfassen und in eine elektrische Signalgröße wandeln. Dazu gehören: Winkelschrittgeber, Winkelencoder, magnetische Winkelaufnehmer, Drehpotentiometer etc.

Die Säaggregate können (jeweils) mit einem Sensor zur Erkennung des Abwurfpunktes eines Saatkorns ausgerüstet sein. Bei Säaggregaten mit Säscheiben kann dies ein Sensor zur Erkennung der Winkelstellung der Säscheibe, zum Beispiel der erwähnte Winkelencoder sein.

Es ist ohne weiteres zu erkennen, daß auch andere technische Verfahren zur Positionsbestimmung des Säaggregates, des zuletzt abgelegten Saatgutes beziehungsweise der Einrichtungen untereinander angewendet werden können, um die erfindungsgemäße Lehre zu verwirklichen.

Diese wird nachstehend anhand verschiedener Ausführungsbeispiele näher erläutert. Dabei zeigen - jeweils in stark schematisierter Darstellung - :
Figur 3: ein Säbild unter Berücksichtigung einer Kurvenführung,
Figur 4: ein individuelles Säbild.

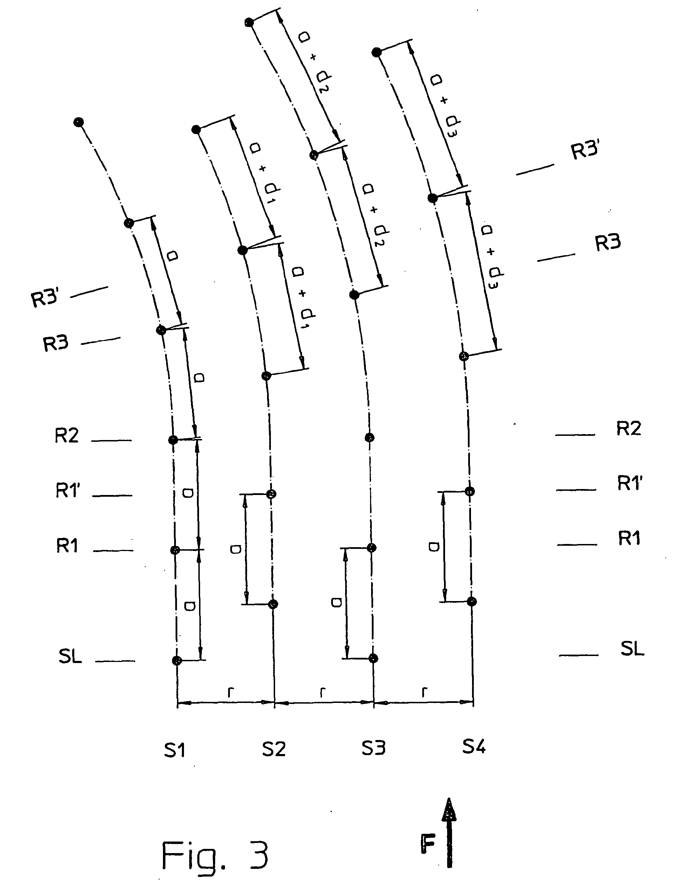

Die Sämaschine nach Figur 3 umfaßt beispielhaft wieder 4 Säaggregate S1 bis S4, die im Abstand "r" an einem gemeinsamen Rahmen befestigt sind.

Die Fahrtrichtung der Maschine zeigt Pfeil F. Die Säaggregate S 1 und S3 sollen, ausgehend von der Startlinie SL, jeweils im Abstand "a" ein Saatkorn ablegen. Entsprechend bilden zwei nebeneinander liegende Saatkörner eine gedachte Linie wie R1.

Die Säaggregate S2 und S4 legen das erste Saatkorn nach "3/2a" ab, danach parallel jeweils im Abstand a, um ein Säbild zu erreichen, bei dem die von S2, S4 abgelegten Körner jeweils genau auf der halben Entfernung der von S1, S3 abgelegten Körner liegen. Zwei nebeneinander liegende Saatkörner von S1,S3 bzw. S2, S4 bilden jeweils eine gedachte Linie wie R1, R1'.

Bei der dargestellten Kurvenführung ergibt sich mit der Forderung, daß die parallel gesteuerten Säaggregate S1 und S3 ihre Körner jeweils genau zwischen den Körner der Säaggregate S2 und S4 ablegen, daß die von S3 abgelegten Körner im Kurvenbereich einen größeren Abstand (a+d2) aufweisen müssen als die von S1 abgelegten Körner.

Entsprechende Verhältnisse ergeben sich für die Säeinrichtungen S2, S4, wie durch die Kurvenabstände "a+d1" beziehungsweise "a+d3" angedeutet, wobei d3>d2>d1 ist.

Erfindungsgemäß werden diese unterschiedlichen Abstände über Winkeldekoder geregelt, die sich an jedem Säaggregat S1, S2, S3, S4 befinden.

Auf diese Weise läßt sich der Abstand der "versetzten Reihen" unabhängig von der Fahrtrichtung konstant halten, wie durch die Linien R1, R1' beziehungsweise R3, R3' angezeigt ist.

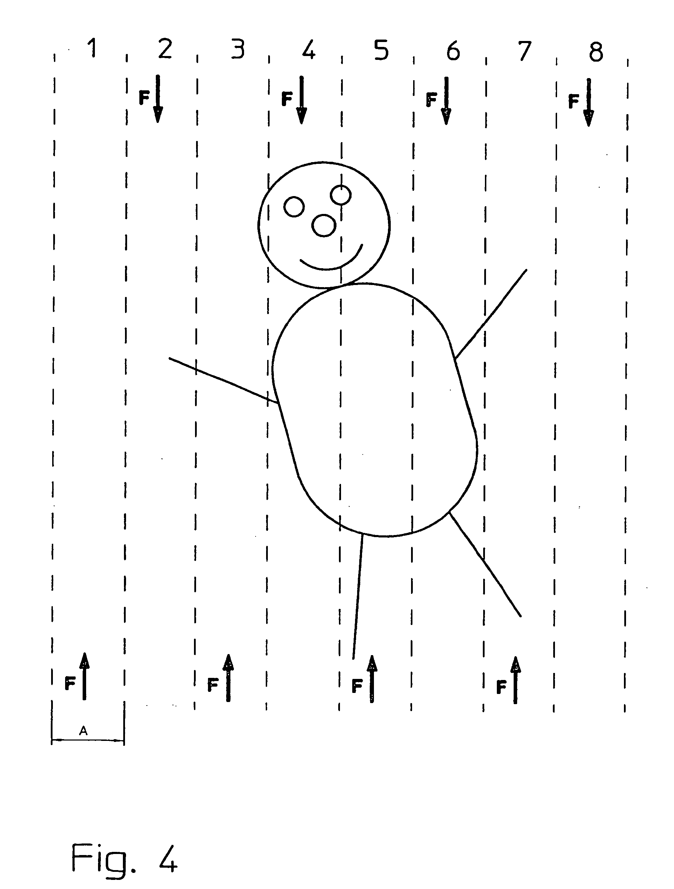

Figur 4 zeigt schematisch ein Säbild, welches mit einer Sämaschine der beschriebenen Art erstellbar ist. Dabei ist mit "A" die Arbeitsbreite der Sämaschine mit einer Vielzahl von Säaggregaten angegeben.

"F" gibt die (mäanderförmige) Fahrtrichtung der Sämaschine an, wobei erstmals während der mit "2" bezeichneten Fahrt Saatkörner von den Säaggregaten abgegeben werden, um den "Armbereich" der zu erstellenden Figur zu bilden. In der Spur 4 werden entsprechend die Saatkörner so abgelegt, dass sie in der gewünschten Zuordnung zur späteren Erkennung eines Kopf- und Körperteils liegen.

## Patentansprüche

1. Sämaschine zur Einzelkornsaat mit folgenden Merkmalen:
mehrere Säaggregate (51, 52, 53, 54) sind im Abstand (r) nebeneinander an einem Rahmen befestigt,
jedes Säaggregat (51, 52, 53, 54) weist einen eigenen Antrieb zur Ablage von Saatgut auf,
die Sämaschine umfaßt eine Regelung, die so ausgelegt ist, daß sie bei einem vorgegebenen Säbild entweder
mindestens ein Säaggregat (51 bis 54) so regelt, daß dieses Säaggregat (51 bis 54) unter Berücksichtigung der Position der Saatgutablage mindestens eines benachbarten Säaggregats das Saatgut ablegt, wobei die Position jedes einzelnen Saatgutes und damit die Position des nächsten abzulegenden Saatgutes genau bestimmbar ist, oder
alle Säaggregate (51, 52, 53, 54) zentral unter Verwendung eines externen Systems zur Positionsbestimmung der Saatgutablage jedes einzelnen Säaggregates unter Berücksichtigung der Position der Saatgutablage
jeweils mindestens eines benachbarten Säaggregates geregelt werden, wobei die Position jedes abgelegten Saatguts und damit die Position des nächsten abzulegenden Saatguts genau bestimmbar ist.

2. Sämaschine nach Anspruch 1, bei der die Regelung so ausgelegt ist, dass sie mindestens ein Säaggregat so regelt, dass dieses Säaggregat unter Berücksichtigung der Position der Saatgutablage mehrerer benachbarter Säaggregate das nächste Saatgut ablegt.

3. Sämaschine nach Anspruch 1, bei der die Regelung so ausgelegt ist, dass sie mehrere Säaggregate so regelt, dass jedes dieser Säaggregate unter Berücksichtigung der Position der Saatgutablage jeweils mindestens eines benachbarten Säaggregates das jeweils nächste Saatgut ablegt.

4. Sämaschine nach Anspruch 1, bei der die Position der Saatgutablage mindestens eines Säaggregats durch ein externes System zur Positionsbestimmung des zuletzt abgelegten Saatguts erfolgt.

5. Sämaschine nach Anspruch 1 oder 4, bei der das externe System ein Festzuordnungssystem wie GPS oder ein Laserpositioniersystem ist.

6. Sämaschine nach Anspruch 1, bei der die Regelung des Säaggregats in Abhängigkeit von der Position der Saatgutablage eines benachbarten Säaggregats unter Verwendung eines Winkelsensors erfolgt.

7. Sämaschine nach Anspruch 1, bei der die Regelung unter Berücksichtigung jeder einzelnen Saatgutablage erfolgt.

## Claims

1. A seed drill for sowing individual seeds, having the following features:
a plurality of sowing units (S1, S2, S3, S4) are attached to a frame adjacent one another at a spacing (r),
each sowing unit (S1, S2, S3, S4) comprises its own drive for depositing seeds,
the seed drill comprises a control system, which is so designed that, in the case of a predetermined sowing pattern, it either
controls at least one sowing unit (S1 to S4) in such a way that this sowing unit (S1 to S4) deposits the seed taking account of the seed depositing position of at least one adjacent sowing unit, wherein the position of each individual seed and thus the position of the next seed to be deposited may be precisely determined, or
all sowing units (S1, S2, S3, S4) are controlled centrally using an external system for determining the seed depositing position of each individual sowing unit, taking account of the seed depositing position in each case of at least one adjacent sowing unit, wherein the position of each deposited seed and thus the position of the next seed to be deposited may be precisely determined.

2. A seed drill according to claim 1, in which the control system is so designed that it controls at least one sowing unit in such a way that this sowing unit deposits the next seed taking account of the seed depositing position of a plurality of adjacent sowing units.

3. A seed drill according to claim 1, in which the control system is so designed that it controls a plurality of sowing units in such a way that each of these sowing units deposits the in each case next seed taking account of the seed depositing position in each case of at least one adjacent sowing unit.

4. A seed drill according to claim 1, in which the seed depositing position of at least one sowing unit is effected by an external system for determining the position in which the last seed was deposited.

5. A seed drill according to claim 1 or claim 4, in which the external system is a locating system such as GPS or a laser positioning system.

6. A seed drill according to claim 1, in which control of the sowing unit takes place using an angle sensor as a function of the seed depositing position of an adjacent sowing unit.

7. A seed drill according to claim 1, in which control takes place taking account of the deposit of each individual seed.

## Revendications

1. Semoir pour monograines comportant les caractéristiques suivantes :
plusieurs éléments semeurs (51, 52, 53, 54) sont fixés à une distance (r) l'un à côté de l'autre contre un bâti,
chaque élément semeur (51, 52, 53, 54) comporte son propre système d'entraînement pour déposer les graines,
le semoir comporte un système de réglage, qui est conçu de telle sorte que, pour un modèle de semis prédéfini,
au moins un élément semeur (51 à 54) est réglé de telle sorte que cet élément semeur (51 à 54) dépose la graine en tenant compte de la position de dépose d'une graine d'au moins un élément semeur voisin, la position de chaque graine et donc la position de la prochaine graine à déposer pouvant être déterminées avec précision, ou
tous les éléments semeurs (51, 52, 53, 54) sont réglés de manière centralisée moyennant l'utilisation d'un système externe de détermination de la position de dépose d'une graine de chaque élément semeur, en tenant compte de la position de dépose d'une graine d'au moins respectivement un élément semeur voisin, la position de chaque graine et donc la position de la prochaine graine à déposer pouvant être déterminées avec précision.

2. Semoir selon la revendication 1, dans lequel le système de réglage est conçu de telle sorte qu'il règle au moins un élément semeur, de telle sorte que cet élément semeur dépose la prochaine graine en tenant compte de la position de dépose d'une graine de plusieurs éléments semeurs voisins.

3. Semoir selon la revendication 1, dans lequel le système de réglage est conçu de telle sorte qu'il règle plusieurs éléments semeurs, de telle sorte que chacun de ces éléments semeurs dépose la graine respectivement suivante en tenant compte de la position de dépose d'une graine d'au moins respectivement un élément semeur voisin.

4. Semoir selon la revendication 1, dans lequel la position de dépose d'une graine d'au moins un élément semeur est assurée par un système externe destiné à déterminer la position de la graine déposée en dernier.

5. Semoir selon la revendication 1 ou 4, dans lequel le système externe est un système de localisation tel que le GPS ou un système de positionnement par laser.

6. Semoir selon la revendication 1, dans lequel le réglage de l'élément semeur est effectué en fonction de la position de dépose d'une graine d'un élément semeur voisin moyennant l'utilisation d'un capteur d'angle.

7. Semoir selon la revendication 1, dans lequel le réglage est effectué en tenant compte de chaque dépose de graine.
